# EUROPÄISCHE PATENTANMELDUNG

(11) **EP 3 778 117 A1**
(43) Veröffentlichungstag der Anmeldung: **17.02.2021**
(21) Anmeldenummer: 20185731.5
(22) Anmeldetag: 14.07.2020
(51) Int. Cl.: B23Q 11/00, B28D 7/02, B23D 59/00, B27B 19/00, B23D 61/00

(54) **ABSAUGUNG**

(30) Priorität: 02.08.2019 DE 202019104249 U
(71) Anmelder: C. & E. Fein GmbH, 73529 Schwäbisch Gmünd-Bargau (DE)
(72) Erfinder: Bek, Fabian, 73529 Schwäbisch Gmünd-Bargau (DE); Mann, Rainer, 73529 Schwäbisch Gmünd-Bargau (DE)

(57) **Zusammenfassung**

Die Erfindung betrifft eine Absaugung (1) für eine Lochsäge (2) einer um eine Oszillationsachse (3) oszillierend angetriebenen Handwerkzeugmaschine (4), mit einem im Wesentlichen scheibenförmigen Grundkörper (5), der eine erste Seite (6), die der Handwerkzeugmaschine (4) zugewandt ist, und eine zweite Seite (7), die der Lochsäge (2) zugewandt ist, aufweist. Die Absaugung umfasst zudem einen Befestigungsabschnitt (8) zum lösbaren Befestigen der Absaugung (1) an einer oszillierend angetriebenen Handwerkzeugmaschine (4) sowie einen Anschlussstutzen (9) zum Anschließen der Absaugung (1) an eine Saugvorrichtung.

## Beschreibung

Die Erfindung betrifft eine Absaugung für eine Lochsäge einer um eine Oszillationsachse oszillierend angetriebenen Handwerkzeugmaschine.

Derartige Lochsägen sind beispielsweise aus der DE 20 2011 052 062 U1 bekannt. Sie finden üblicherweise Verwendung im Trockenbau und kommen zum Einsatz, wenn in Gipskartonplatten oder in Grobspanplatten Löcher eingebracht werden müssen, beispielsweise für das Setzen von Steckdosen oder als Durchführungen für Rohre. Aber auch zum Sägen von Löchern in Parkett oder anderen Bodenbelägen werden Lochsägen verwendet. Die Lochsägen kommen dabei häufig in Kombination mit rotierend angetriebenen Werkzeugmaschinen, wie Bohrmaschinen, aber auch in Kombination mit oszillierend angetriebenen Handwerkzeugmaschinen zum Einsatz. Die Verwendung der aus dem Stand der Technik bekannten Lochsägen hat sich jedoch als problematisch erwiesen, da der bei der Bearbeitung entstehende Staub nicht oder nur schwer abgeführt werden kann.

Insbesondere bei der Bearbeitung von Gipskartonplatten führt der entstehende Staub zu einer nicht unerheblichen Verschmutzung des Nutzers sowie der Arbeitsumgebung. Dies ist besonders dann problematisch, wenn nachträgliche Löcher in Wände von bereits eingerichtetem Wohnraum eingebracht werden sollen.

Der Erfindung liegt daher die Aufgabe zugrunde, die oben genannten Nachteile zu reduzieren.

Diese Aufgabe wird gemäß der Erfindung gelöst durch die Merkmale des Anspruchs 1, also durch eine Absaugung für eine Lochsäge einer um eine Oszillationsachse oszillierend angetriebenen Handwerkzeugmaschine, mit einem im Wesentlichen scheibenförmigen Grundkörper, der eine erste Seite, die der Handwerkzeugmaschine zugewandt ist, und eine zweite Seite, die der Lochsäge zugewandt ist, aufweist, mit einem Befestigungsabschnitt zum lösbaren Befestigen der Absaugung an einer oszillierend angetriebenen Handwerkzeugmaschine sowie mit einem Anschlussstutzen zum Anschließen der Absaugung an eine Saugvorrichtung.

Hierdurch wird eine besonders einfache Möglichkeit geschaffen, den bei der Verwendung einer Lochsäge in Kombination mit einer um eine Oszillationsachse oszillierend angetriebenen Handwerkzeugmaschine entstehenden Bohrstaub abzuführen. Die Absaugung kann dabei mittels des Befestigungsabschnitts an der Handwerkzeugmaschine befestigt werden und die externe Saugvorrichtung, beispielsweise ein Staubsauger, mit dem Anschlussstutzen verbunden werden.

Als vorteilhaft hat es sich hier auch erwiesen, wenn der Anschlussstutzen auf der ersten Seite angeordnet ist und auf der zweiten Seite in einer Einmündung mündet. Durch die Absaugung des entstehenden Bohrstaubs von der Rückseite der Lochsäge her wird letztlich gewährleistet, dass in allen Bearbeitungssituationen der auftretende Bohrstaub effektiv abgeführt werden kann und die Absaugung die Bearbeitung nicht nachteilig beeinflusst.

Bewährt hat es sich auch, wenn der Anschlussstutzen gegenüber einer senkrecht zu der ersten Seite stehenden Normalen einen Winkel zwischen 20° und 50° und besonders bevorzugt einen Winkel von 35° aufweist. Zwar ergibt sich aufgrund der oszillierenden Bewegung der Lochsäge - anders als bei Winkelschleifern - keine Vorzugsrichtung, allerdings ergibt sich durch die Neigung des Anschlussstutzens eine verbesserte Möglichkeit, die Absaugung an eine Saugvorrichtung anzuschließen.

Als besonders günstig hat es sich auch erwiesen, wenn an der Einmündung des Anschlussstutzens auf der zweiten Seite eine Stufe ausgebildet ist. Hierdurch wird auf einfache Art und Weise der Luftstrom lokal gebündelt und damit die Absaugleistung verbessert.

Für die Stabilität der Absaugung hat es sich auch als vorteilhaft erwiesen, wenn auf der ersten Seite ein Verstärkungsring angeordnet ist, an dem Radialverstrebungen ausgebildet sind. In diesem Zusammenhang hat es sich außerdem noch bewährt, wenn die Radialverstrebungen sternförmig angeordnet sind und nach außen hin abflachen. Hierdurch kann die Absaugung insbesondere auch aus Kunststoff gefertigt werden.

Als günstig hat es sich auch erwiesen, wenn an der zweiten Seite ein Axialkragen zur außenumfangsseitigen Umgreifung der Lochsäge ausgebildet ist. Hierdurch lässt sich nicht nur der auf der Rückseite, also auf der von dem Werkstück wegweisenden Seite, der Lochsäge auftretende Bohrstaub effektiv abführen. Es ist vielmehr auch möglich, den außenumfangsseitigen Bohrstaub besonders einfach abzuführen, da dieser durch den Spalt zwischen dem Axialkragen und dem Außenumfang der Lochsäge angesaugt und durch diesen durchtreten kann.

In diesem Zusammenhang hat es sich auch als besonders vorteilhaft gezeigt, wenn das Verhältnis zwischen der Höhe des Axialkragens und dem Durchmesser des Grundkörpers zwischen 1:11 und 4:11 und besonders bevorzugt bei 1,5:11 liegt. Ist der Axialkragen zu hoch, so besteht das Problem, dass die verwendete Lochsäge nicht mehr tief genug in das zu bearbeitende Werkstück eindringen kann. Ist hingegen die Höhe des Axialkragens zu gering gewählt, so wird der seitliche Bohrstaub nicht effektiv abgeführt.

Um das Handling der Erfindung zu erleichtern, hat es sich zudem bewährt, wenn in dem scheibenförmigen Grundkörper eine Durchführung ausgebildet ist, die einen Kragen aufweist. Durch die Durchführung kann insbesondere die Werkzeugaufnahme der Handwerkzeugmaschine durchgeführt werden und durch den Kragen, der besonders bevorzugt auf der zweiten Seite des Grundkörpers angeordnet ist, lässt sich eine Abdichtung gegenüber der Werkzeugaufnahme erreichen, wodurch ein Eindringen von Verschmutzungen in die Handwerkzeugmaschine auf einfache Art und Weise verhindert wird.

Als besonders günstig hat es sich auch gezeigt, wenn das Verhältnis zwischen dem Kragen und dem Axialkragen zwischen 3:10 und 8:10 und besonders bevorzugt bei 5:10 liegt. Hierdurch lässt sich gewährleisten, dass die Umgreifung der Lochsäge nur zu einem bestimmten Grad erfolgt, der eine negative Beeinträchtigung der Arbeitsleistung verhindert.

Als günstig hat es sich auch erwiesen, wenn der Befestigungsabschnitt zwei Schraubhülsen umfasst. Hierdurch lässt sich die Absaugung sicher und insbesondere auch unverdrehbar an der Handwerkzeugmaschine befestigen. In diesem Zusammenhang hat es sich auch bewährt, wenn die Verschraubung von der zweiten Seite her erfolgt. Auch hat es sich hierbei als günstig gezeigt, wenn die Schraubenköpfe auf der zweiten Seite in entsprechenden Vertiefungen aufgenommen werden können.

Als vorteilhaft hat es sich hierbei auch erwiesen, wenn die beiden Schraubhülsen mittels eines Steges miteinander verbunden sind. Hierdurch wird die Stabilität der Absaugung noch weiter erhöht.

Im Folgenden wird die Erfindung an einem in den Zeichnungen dargestellten Ausführungsbeispiel näher erläutert; es zeigen:
- Fig. 1: eine Seitenansicht auf eine Absaugung, die an einer Handwerkzeugmaschine befestigt ist,
- Fig. 2: eine Draufsicht auf eine zweite Seite der erfindungsgemäßen Absaugung,
- Fig. 3: eine Schnittansicht entlang des Schnittes III-III aus der Figur 2,
- Fig. 4: eine Seitenansicht der Absaugung,
- Fig. 5: eine perspektivische Ansicht der Unterseite der Absaugung, und
- Fig. 6: eine Draufsicht auf die Oberseite der Absaugung.

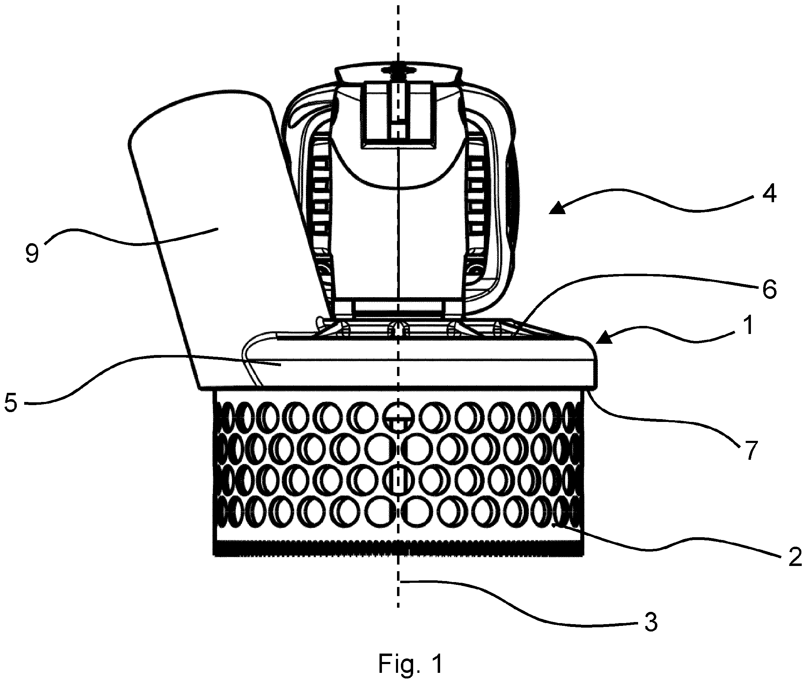

Figur 1 zeigt in einer Seitenansicht eine Absaugung 1 für eine Lochsäge 2, die an einer um eine Oszillationsachse 3 oszillierend angetriebenen Handwerkzeugmaschine 4 befestigt ist. Die Absaugung 1 weist einen im Wesentlichen runden, scheibenförmigen Grundkörper 5 auf, der eine erste Seite 6, die der Handwerkzeugmaschine 4 zugewandt ist, und eine zweite Seite 7 aufweist, die der Lochsäge 2 zugewandt ist. Die Absaugung 1 ist mit einem Befestigungsabschnitt 8 an der Handwerkzeugmaschine 4 festgeschraubt und damit lösbar befestigt. In der Figur 1 ist außerdem ein Anschlussstutzen 9 zu erkennen, der zum Anschließen der Absaugung 1 an eine in der Zeichnung nicht dargestellte Saugvorrichtung dient, die beispielsweise als ein Staubsauger ausgebildet ist.

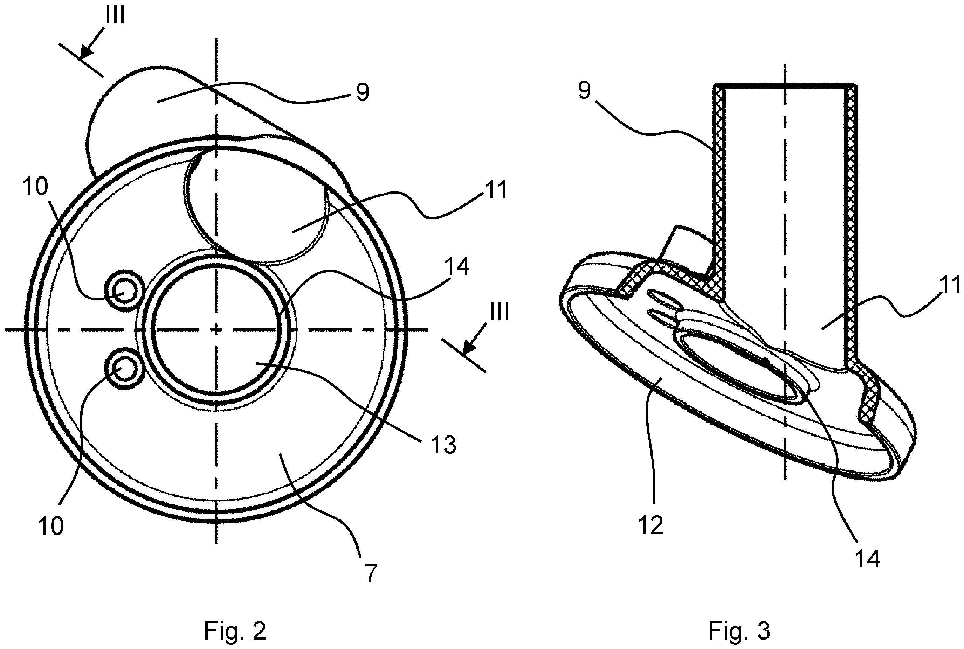

Figur 2 zeigt in einer Draufsicht von unten die zweite Seite 7 der erfindungsgemäßen Absaugung 1. Hier sind insbesondere Aufnahmen 10 für die Schrauben zu erkennen, mit denen die Absaugung 1 mit der Handwerkzeugmaschine 4 verschraubt werden kann. Außerdem lässt sich aus der Figur 2 erkennen, dass der Anschlussstutzen 9 auf der ersten Seite 6 angeordnet ist und in einer Einmündung 11 auf der zweiten Seite 7 mündet.

Wie insbesondere der in der Figur 3 dargestellten Schnittansicht entlang des Schnittes III-III aus der Figur 2 entnommen werden kann, ist der Anschlussstutzen 9 auf der ersten Seite 6 des Grundkörpers 5 angeordnet und mündet auf der zweiten Seite 7 in der Einmündung 11. Die Schnittansicht der Figur 3 zeigt außerdem, dass an der zweiten Seite 7 ein Axialkragen 12 zur außenumfangsseitigen Umgreifung der Lochsäge 2 ausgebildet ist. Das Verhältnis zwischen der Höhe des Axialkragens 12 und dem Durchmesser des Grundkörpers 5 liegt zwischen 1:11 und 3:11 und besonders bevorzugt, wie in dem gezeigten Ausführungsbeispiel, bei 1,5:11. In dem scheibenförmigen Grundkörper 5 ist eine Durchführung 13 ausgebildet, durch die die Absaugung 1 auf die Handwerkzeugmaschine aufgesetzt werden kann. Die Durchführung 13 weist auf der zweiten Seite 7 einen Kragen 14 auf, wobei das Verhältnis zwischen dem Kragen 14 und dem Axialkragen 12 zwischen 3:10 und 8:10 und in dem gezeigten Ausführungsbeispiel bei 5:10 liegt.

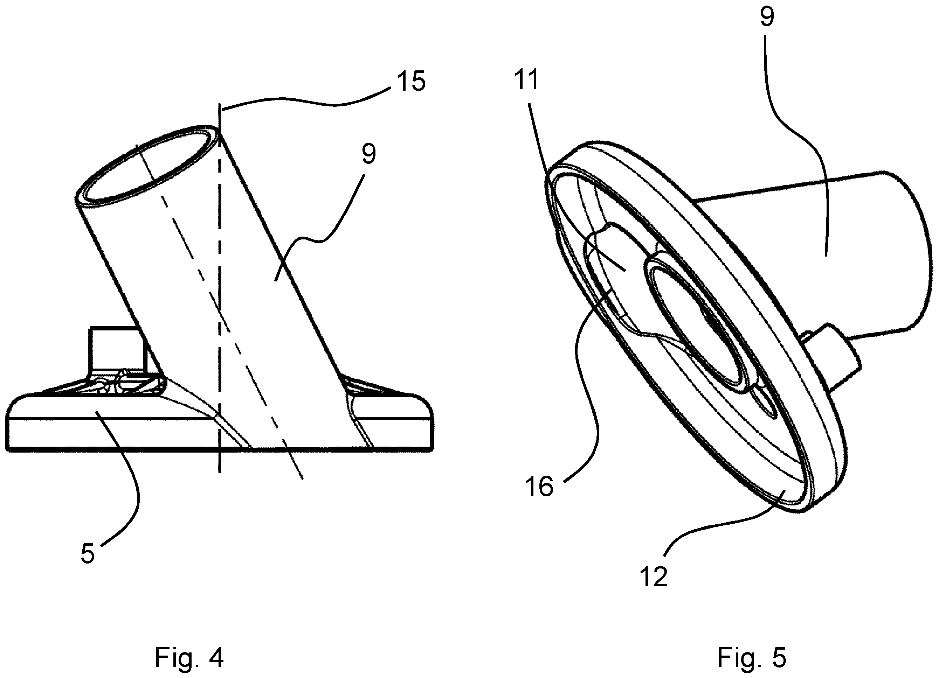

Figur 4 zeigt, dass der Anschlussstutzen 9 gegenüber einer senkrecht zu der ersten Seite 6 stehenden Normalen 15 um einen Winkel zwischen 20° und 50° und in dem gezeigten Ausführungsbeispiel um einen Winkel von 35° geneigt ist.

Die in der Figur 5 dargestellte perspektivische Ansicht auf die zweite Seite 7 macht deutlich, dass an der Einmündung 11 des Anschlussstutzens 9 auf der zweiten Seite 7 eine Stufe 16 ausgebildet ist, durch die der Luftstrom kurzfristig beschleunigt wird.

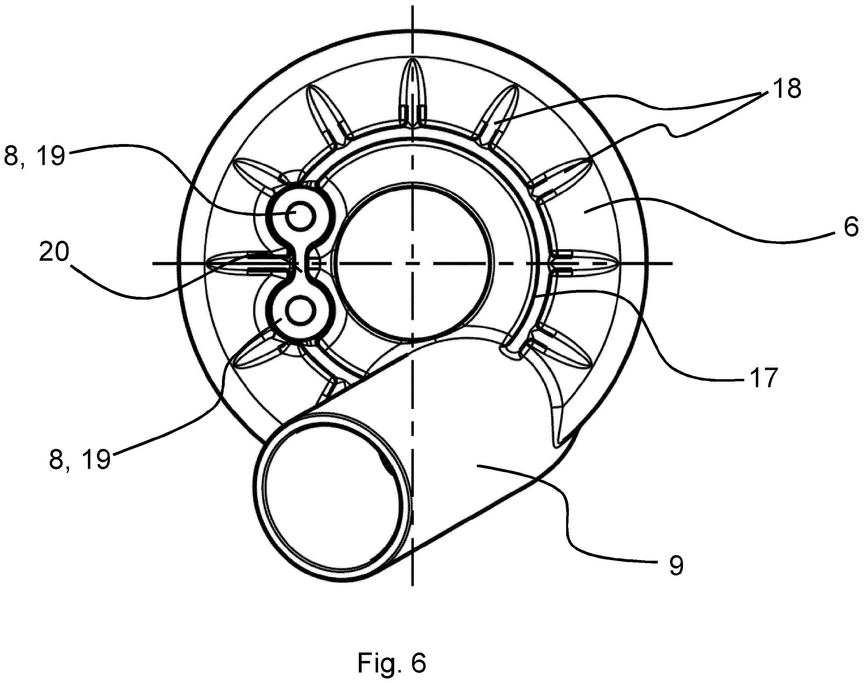

Figur 6 zeigt, dass auf der ersten Seite 6 ein Verstärkungsring 17 angeordnet ist, an dem Radialverstrebungen 18 ausgebildet sind. Die Radialverstrebungen 18 sind dabei sternförmig angeordnet und flachen nach außen hin ab. Außerdem werden die Radialverstrebungen 18 nach außen hin auch zunehmend schmaler. Zudem sind in der Figur 6 zwei Schraubhülsen 19 zu erkennen, die den Befestigungsabschnitt 8 bilden und mittels eines Steges 20 miteinander verbunden sind.

### Bezugszeichenliste

- 1: Absaugung
- 2: Lochsäge
- 3: Oszillationsachse
- 4: Handwerkzeugmaschine
- 5: Grundkörper
- 6: erste Seite
- 7: zweite Seite
- 8: Befestigungsabschnitt
- 9: Anschlussstutzen
- 10: Aufnahme
- 11: Einmündung
- 12: Axialkragen
- 13: Durchführung
- 14: Kragen
- 15: Normale
- 16: Stufe
- 17: Verstärkungsring
- 18: Radialverstrebung
- 19: Schraubhülse
- 20: Steg

## Patentansprüche

1. Absaugung (1) für eine Lochsäge (2) einer um eine Oszillationsachse (3) oszillierend angetriebenen Handwerkzeugmaschine (4), mit einem im Wesentlichen scheibenförmigen Grundkörper (5), der eine erste Seite (6), die der Handwerkzeugmaschine (4) zugewandt ist, und eine zweite Seite (7), die der Lochsäge (2) zugewandt ist, aufweist, mit einem Befestigungsabschnitt (8) zum lösbaren Befestigen der Absaugung (1) an einer oszillierend angetriebenen Handwerkzeugmaschine (4) sowie mit einem Anschlussstutzen (9) zum Anschließen der Absaugung (1) an eine Saugvorrichtung.

2. Absaugung (1) nach Anspruch 2, **dadurch gekennzeichnet, dass** der Anschlussstutzen (9) auf der ersten Seite (6) angeordnet ist und auf der zweiten Seite (7) in einer Einmündung (11) mündet.

3. Absaugung (1) nach Anspruch 1 oder 2, **dadurch gekennzeichnet, dass** der Anschlussstutzen (9) gegenüber einer senkrecht zu der ersten Seite (6) stehenden Normalen (15) einen Winkel zwischen 20° und 50° und besonders bevorzugt einen Winkel von 35° aufweist.

4. Absaugung (1) nach Anspruch 2 oder 3, **dadurch gekennzeichnet, dass** an der Einmündung (11) des Anschlussstutzens (9) auf der zweiten Seite (7) eine Stufe (16) ausgebildet ist.

5. Absaugung (1) nach einem der Ansprüche 1 bis 4, **dadurch gekennzeichnet, dass** auf der ersten Seite (6) ein Verstärkungsring (17) angeordnet ist, an dem Radialverstrebungen (18) ausgebildet sind.

6. Absaugung (1) nach Anspruch 5, **dadurch gekennzeichnet, dass** die Radialverstrebungen (18) sternförmig angeordnet sind und nach außen hin abflachen.

7. Absaugung (1) nach einem der Ansprüche 1 bis 6, **dadurch gekennzeichnet, dass** an der zweiten Seite (7) ein Axialkragen (12) zur außenumfangsseitigen Umgreifung der Lochsäge (2) ausgebildet ist.

8. Absaugung (1) nach Anspruch 7, **dadurch gekennzeichnet, dass** das Verhältnis zwischen der Höhe des Axialkragens (12) und dem Durchmesser des Grundkörpers (5) zwischen 10:110 und 30:110 und besonders bevorzugt bei 15:110 liegt.

9. Absaugung (1) nach einem der Ansprüche 1 bis 8, **dadurch gekennzeichnet, dass** in dem scheibenförmigen Grundkörper (5) eine Durchführung (13) ausgebildet ist, die einen Kragen (14) aufweist.

10. Absaugung (1) nach Anspruch 9, **dadurch gekennzeichnet, dass** das Verhältnis zwischen dem Kragen (14) und dem Axialkragen (12) zwischen 3:10 und 8:10 und besonders bevorzugt bei 5:10 liegt.

11. Absaugung (1) nach einem der Ansprüche 1 bis 10, **dadurch gekennzeichnet, dass** der Befestigungsabschnitt (8) zwei Schraubhülsen (19) umfasst.

12. Absaugung (1) nach Anspruch 11, **dadurch gekennzeichnet, dass** die beiden Schraubhülsen (19) mittels eines Steges (20) miteinander verbunden sind.
